# EUROPÄISCHE PATENTANMELDUNG

(11) **EP 1 386 561 A2**
(43) Veröffentlichungstag der Anmeldung: **04.02.2004**
(21) Anmeldenummer: 03017166.4
(22) Anmeldetag: 29.07.2003
(51) Int. Cl.: A45F 5/00

(54) **Umhängeband mit Messfunktion**

(30) Priorität: 29.07.2002 DE 20211716 U; 29.07.2002 DE 20211715 U
(71) Anmelder: Adrian, Desirée, 50996 Köln (DE)
(72) Erfinder: Adrian, Desirée, 50996 Köln (DE)
(74) Vertreter: Bungartz, Klaus Dipl.-Ing.

(57) **Zusammenfassung**

Die Erfindung betrifft ein von einem Lanyardband und einem Haltemittel gebildetes Umhängeband zum Tragen von Schlüsseln, Ausweisen oder dergleichen. Die bekannten Umhängebänder weisen einen unteres Haltemittel, meist einen Karabinerhaken auf und werden um den Hals gelegt. Die Erfindung soll weitere Funktionen ermöglichen.

Hierzu weist das Umhängeband zum einen eine auf das Lanyardband gedruckte Messskala und zum anderen einen Panikverschluss auf, der von den beiden Enden des Lanyardbandes gebildet ist. Eines der Enden weist zwei Laschen und das andere Ende eine Einsteckspitze auf, die durch beide Laschen jeweils von verschiedenen Seiten geschoben wird.

## Beschreibung

Die Erfindung betrifft einen so genannten Lanyard, nämlich ein Umhängeband zum Tragen von Schlüsseln, Ausweisen oder ähnlichem mit einem Lanyardband, das um den Hals einer Person gelegt werden kann und an einem unteren Ende eine Befestigungsvorrichtung für einen zu tragenden Gegenstand aufweist.

Umhängebänder dieser Art sind allgemein bekannt. Diese bekannten Lanyards weisen entweder keinen Verschluss auf und müssen über den Kopf des Trägers gelegt werden oder sie sind mit einem so genannten Schnell- oder Panikverschluss ausgestattet, der beispielsweise von einer Kunststoffbuchse und einer darin arretierbaren Einsteckzunge gebildet ist. Sie sind üblicherweise mit Werbeaufdrucken versehen und werden zum Tragen von Schlüsseln, Identitätskarten oder ähnlichem genutzt.

Solche Umhängebänder sind zwar ausgesprochen praktisch und erleichtern das Tragen der jeweiligen Gegenstände. Um die Verbreitung der Lanyards jedoch noch weiter zu steigern wäre es wünschenswert, weitere Benutzungs- bzw. Kaufanreize bieten zu können um so weitere Anwendungsbereiche und Kundenkreise zu erschließen.

Aufgabe der Erfindung ist es daher, ein Umhängeband zu schaffen, dass bei geringen Zusatzkosten zusätzliche Funktionen bietet.

Diese Aufgabe wird nach der Erfindung dadurch gelöst, dass das Lanyardband auf zumindest einer Seite mit einer Messskala versehen ist.

Durch die erfindungsgemäße Ausgestaltung des Lanyardbandes mit der Messskala, die üblicherweise eine in Millimeter und Zentimeter unterteilten Skala, wie sie von einem üblichen Maßband her bekannt ist, sein wird, kann nun das Umhängeband auch als Maßband genutzt werden. Auch wenn hierfür wohl bevorzugt Lanyardbänder mit Verschluss genutzt werden, die zu einem geradlinigen Band geöffnet werden können, muss dies nicht unbedingt sein.

Je nach Einsatzzweck kann es ausreichend sein, wenn nur ein kurzes Band zur Verfügung steht. Insbesondere Messebesucher, Verkäufer oder Kunden zum Beispiel eines Möbelgeschäftes werden den Umstand schätzen, nun ein Maßband zur Verfügung zu haben, ohne dieses zusätzlich zu tragen bzw. in der Tasche mitzuführen. So kann etwa der Hemdenverkäufer mit dem Lanyard, etwa bedruckt mit den Namen seiner Firma oder ausgestattet mit farbigen Flaggen zum Kenntlichmachen seiner Sprachkenntnisse, mit dem neuen Umhängeband die Kragenweite seiner Kundschaft messen. In diesem Fall wäre es zum Beispiel völlig ausreichend, wenn die Messskala auf der Innenseite des Lanyardbandes angeordnet ist, ohne dass ein zusätzlicher Verschluss vorgesehen werden muss.

Die Flaggen zum Kenntlichmachen weiterer Eigenschaften oder Fähigkeiten des Trägers können entweder mittels üblicher Pins an dem Lanyardband befestigt werden oder auch auf Reitern oder Hülsen angeordnet sein, die auf das Lanyardband aufgeschoben oder aufgesteckt sein können.

Damit das Maßband eine hinreichende Sicherheit der Messungen gewährleistet sollte es bei unmittelbarem Aufdruck der Messskala möglichst nicht elastisch ausgebildet sein, da ansonsten die Gefahr besteht, durch unbeabsichtigte Zugbelastungen das Messergebnis zu verfälschen. Bevorzugt ist daher das Lanyardband aus einem unflexiblen Material, insbesondere aus einem wenig elastischen Textilband hergestellt. Ein mögliches Material hierfür ist beispielsweise Textilmaterial, wobei durch Vorschrumpfen oder Imprägnieren die Festigkeit zusätzlich verstärkt werden kann.

Die Messskala wird, wie bereits oben ausgeführt, in Deutschland bevorzugt eine metrische Unterteilung aufweisen, während in anderen Staaten natürlich andere Einteilungen zur Anwendung kommen können. Auch eine Kombination mehrer Systeme ist, wie bereits von Linealen oder Zollstöcken bekannt, möglich. Ferner können auch brachenoder firmenspezifische Maßeinheiten, wie etwa Schuhgrößen in den verschiedenen System, Griffgrößen für Sportgeräte, Fliesenlängen oder andere Rastermasse auf das Lanyardband gedruckt oder in sonstiger Weise angeordnet werden.

Während die einfachste Variante der Messskala von einem Aufdruck gebildet ist, kann die Messskala auch auf einem Träger angeordnet sein, der auf das Lanyardband aufgeschoben wird. Dieser Träger kann etwa eine Kunststoffhülse sein, die ihrerseits mit der Messskala bedruckt ist und schlauchartig auf das Lanyardband aufgeschoben ist. Alternativ kann die Messskala auch auf einer Einlage angeordnet sein, die zwischen die Kunststoffhülse und das Lanyardband eingelegt ist.

Schließlich kann der Träger auch von einer Klammer gebildet sein, die längs auch das Lanyardband aufgelegt ist und mit einem oder mehreren Randbereichen, die jeweils um 180° umgelegt sind, das Lanyardband umgreifen. In beiden Fällen entspricht die Länge des Trägers zumindest der Länge der Messskala. Der Träger kann auch transparentem oder durchgefärbtem Kunststoff bestehen, wobei auch eine reine Papiertülle oder eine Schrumpffolie eingesetzt werden können. Wird ein Träger verwendet, kann das Lanyardband auch aus einem flexiblen, elastischen Material bestehen, da hier die Zugfestigkeit des Trägermaterials die Messgenauigkeit bestimmt.

Um eine Eichmöglichkeit zu erzielen sollte das Lanyardband möglichst nicht in seiner Längsrichtung elastisch sein. Dies kann zum Beispiel dadurch erzielt werden, dass das Band aus einem Gewebe hergestellt wird. Eine weitere bevorzugte Ausgestaltung der Erfindung verwendet einen Verbundwerkstoff zur Herstellung des Lanyardbandes. Die Fasern können Glasfasern oder auch alle sonstigen Fasern, insbesondere Kohlefasern oder auch nicht elastische Fäden aus der Textilindustrie sein.

Das Lanyardband kann auf der äußeren Seite oder der inneren Seite mit der Messskala versehen sein. Es können auch beidseitig Skalen, etwa mit unterschiedlichen Messsystemen oder verschiedenen Unterteilungen vorgesehen sein. Eine farbliche Kennzeichnung, entweder der Unterteilung oder des Hintergrundes kann kenntlich machen, welche Seite welche Messskala trägt.

Bevorzugt wird das Umhängeband jedoch so ausgestaltet sein, dass es zu einem ebenen Maßband geöffnet werden kann. Dies kann zum Beispiel über einen so genannten Panik- oder Schnellverschluss erfolgen, der erstes freies Ende und ein zweites freie Ende des Umhängebandes miteinander zu einem geschlossenen Band verbindet. Der Panikverschluss kann dabei besonders einfach von einer an dem ersten freien Ende angeordneten ersten Einstecklasche und einer an dem zweiten freien Ende angeordneten ersten Durchstecköffnung gebildet sein, durch die die erste Einstecklasche gegen die Kraft einer Rückhaltekraft hindurch gesteckt werden kann.

Durch diese Ausgestaltung des Umhängebandes kann nun ohne weitere Anbauteile oder zusätzliche Materialien ein Panikverschluss auf besonders einfache Art geschaffen werden. Hierzu muss lediglich die erste Durchstecköffnung in das Material des Umhängebandes eingebracht werden, was durch einfaches Stanzen oder Schneiden erfolgen kann.

Bevorzugt werden solche Umhängebänder aus einem steifen Material gefertigt. Dies kann beispielsweise Neopren oder ein vergleichbarer Werkstoff sein, also ein Material, dass ein Zusammenstecken der Enden des Lanyardbandes ermöglicht, aber andererseits auch so ausreichend steif ist, dass die Hintergreifungen durch die Gestaltung der Enden einen sicheren Verschluss bieten.

Zur Bildung des Panikverschlusses oder eines einfachen Schnellverschlusses ist es dann ausreichend, wenn das erste Ende des Umhängebandes so ausgebildet wird, dass es in diese erste Durchstecköffnung eingesteckt werden kann und anschließend durch Rückhaltekräfte einerseits so fest gehalten ist, dass es die vorgesehene Gewichtskraft an dem unteren Ende des Lanyards mit der erforderlichen Sicherheit halten kann und andererseits bei Auftreten einer über die zulässige Belastung hinausgehenden Kraft aus der ersten Durchstecköffnung selbsttätig herausrutscht.

Der Panikverschluss muss nicht nur eine Sicherung gegen Verletzungen darstellen, er kann auch als Schnellöffnung des Umhängebandes genutzt werden. Insbesondere ist er nicht mit ausladenden, starren Verschlusskörpern versehen sondern verfügt über nicht aufbauende und sogar elastische Enden, so dass herkömmliche Karabinerhaken oder auch nur gelochte Karten bzw. Sichthüllen für Ausweise einfach aufgeschoben werden können. So lässt sich auch zum Bespiel die Sichthülle leicht und einfach austauschen und der Lanyard wieder verwenden.

Ferner kann die formschlüssige Verbindung auch von einer Vielzahl von Hinterschneidungen gebildet sein, wie es etwa im Fall einer Klettverbindung gegeben ist. Hier ist dann bevorzugt das erste Ende des Umhängebandes mit einer Mehrzahl von hakenartigen Gliedern versehen, die in Hinterschneidungen der ersten Durchstecköffnung eingreifen. Selbstverständlich können die hakenartigen Glieder auch an der ersten Durchstecköffnung und die Hinterschneidungen an dem ersten Ende angeordnet sein.

Alternativ kann die Rückhaltekraft auch von einer reibschlüssigen Verbindung ausgebracht werden, wobei dies insbesondere bei formstabilen oder sehr elastischen Materialen in Betracht kommen dürfte, so dass eine hinreichend große Spannkraft zum Einklemmen des ersten Endes des Umhängebandes aufgebracht werden kann.

Eine weitere bevorzugte Ausgestaltung der Erfindung weist einen Panikverschluss mir einer Zusatzsicherung auf, die von einem an dem zweiten freien Ende hinter der ersten Durchstecköffnung angeordneten zweiten Einstecklasche und einer an dem ersten freien Ende angeordneten, vor der ersten Einstecklasche angeordneten zweiten Durchstecköffnung gebildet ist.

Durch die zweite Durchstecköffnung ist hier die zweite Einstecklasche gegen die Kraft einer weiteren Rückhaltekraft hindurch steckbar. Auch die zweite Einstecklasche kann einen seitlich hervorspringenden Randbereich aufweisen, der bei Einstecken der zweiten Einstecklasche einen Rand der zweiten Durchstecköffnung wie oben bereits im Falle der ersten Einstecklasche beschrieben zu hintergreifen vermag. Auch hier kann eine formschlüssige Verbindung oder eine reibschlüssige Verbindung gewählt werden.

Im Falle einer formschlüssigen Verbindung kann der die zweite oder auch die erste Durchstecköffnung der jeweiligen Einstecklasche hintergreifende Rand relativ zur Einstecklasche umlaufend ausgebildet sein oder auch nur seitlich an einer oder beiden Seiten der Einstecklasche angeordnet sein. Die erste Durchstecköffnung wird üblicherweise besonders einfach von einem im Winkel zur Längsachse des Lanyardbandes angeordneten ersten Querschlitz gebildet. Ebenso kann die zweite Durchstecköffnung von einem solchen Schlitz gebildet sein. In beiden Fällen ist der Winkel zwischen dem ersten Querschlitz oder dem zweiten Querschlitz und der Längsachse des Lanyardbandes bevorzugt etwa 90°.

Der Panikverschluss wird üblicherweise an demjenigen, dem unteren Ende gegenüberliegenden Bereich des geschlossenen Lanyardbandes, der bei Tragen des Umhängebandes am Nacken des Trägers anliegen wird, angeordnet sein. Alternativ kann auch jede andere Position sogar das untere Ende des Umhängebandes als Position für den Panikverschluss gewählt werden. Die Befestigungsvorrichtung kann, wie bereits bei den bekannten Umhängebändern, ein Karabinerhaken oder ein sonstiges Befestigungsmittel sein.

Eine weitere bevorzugte Ausgestaltung weist eine Befestigungsvorrichtung auf, die von einem Halteband gebildet ist, das mit seinem oberen Ende mit dem geschlossenen Lanyardband verbunden und an seinem unteren Ende eines der möglichen Befestigungsmittel aufweist. Das Halteband kann eine weitere Schnelllösevorrichtung aufweisen, die das Halteband in einen unteren Teil und einen oberen Teil unterteilt und über die der untere Teil des Haltebandes leicht abnehmbar bzw. austauschbar ist. Diese Ausgestaltung ist beispielsweise besonders praktisch, wenn der an dem Befestigungsmittel befestigte Gegenstand abgenommen werden soll, etwa um einen Schlüssel an Dritte zu verleihen oder in ein schwer zugängliches Schloss einzustecken.

Weitere Merkmale und Vorteile der Erfindung ergeben sich aus den Unteransprüchen und aus der nachfolgenden Beschreibung eines bevorzugten Ausführungsbeispieles anhand der Zeichnungen.

In den Zeichnungen zeigt:
- Figur 1:: Eine schaubildliche Darstellung einer ersten Ausgestaltung eines Umhängebandes und
- Figur 2:: Eine schaubildliche Darstellung einer weiteren Ausgestaltung eines Umhängebandes und

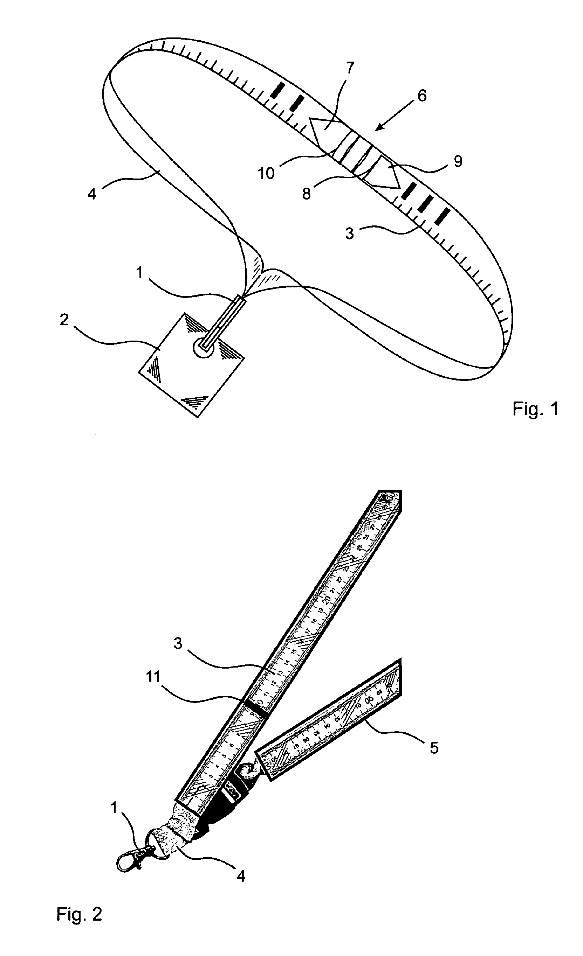

In Figur 1 ist ein Umhängeband mit einer Befestigungsvorrichtung 1 für einen zu befestigenden Gegenstand 2, beispielsweise einen Schlüsselbund oder, wie hier gezeigt, einer Identitätskarte dargestellt. Das Umhängeband wird im Wesentlichen von einem Lanyardband 4 gebildet, das im unteren Bereich mit der Befestigungsvorrichtung 1 versehen ist.

Die Messskala 3 ist hier eine in Millimeter und Zentimeter unterteilte Skala (hier stilisiert dargestellt), ähnlich einem üblichen Maßband oder einem Zollstock. Sie erstreck sich weitgehend über die gesamte äußere Länge des Lanyardbandes 4, nur im vorderen, der Befestigungsvorrichtung 1 nahen Bereich ist keine Messskala 3 angeordnet.

Das Lanyardband 4 weist an seiner äußeren Fläche eine Messskala 3 und einen - hier von einer Steckverbindung gebildeten - Panikverschluss 6 auf. Der Panikverschluss 6 wird von einer ersten Einstecklasche 7 an einem ersten freien Ende des Lanyardbandes 4 und einer ersten Durchstecköffnung 8 an einem zweiten freien Ende des Lanyardbandes 4 gebildet. Eine zweite Einstecklasche 9 und eine zweite Durchstecköffnung 10 sichern den Verschluss zusätzlich gegen unbeabsichtigtes Öffnen ab.

Wird nun im täglichen Gebrauch ein Maßband benötigt kann zum Beispiel ein das Umhängeband tragender Verkäufer dieses leicht von seinem Hals abziehen und aufklappen. So erhält er ein Maßband, das er nach Gebrauch wieder zu einem Umhängeband zusammenstecken kann, an dem dann beispielsweise sein Mitarbeiterausweis getragen werden kann.

Figur 2 zeigt einen zur Figur 1 ähnlichen Lanyard. Hier ist die Messskala 3 auf eine Folie aufgedruckt und über einen transparenten Träger 5 mit dem Lanyardband 4 verbunden. Die Messskala weist auch in dieser Ausgestaltung eine übliche Millimeter/Zentimeter-Einteilung auf.

Der Schnellverschluss ist bei dieser Ausgestaltung ein üblicher Klemmverschluss, der im Bereich der Befestigungsvorrichtung angeordnet ist. Anstelle dieses Klemmverschlusses könnte auch eine Klettverbindung vorgesehen sein. Auf dem Träger 5 ist ein Reiter 11 angeordnet, der als Merkhilfe dient.

### Bezugszeichenliste:

- 1: Befestigungsvorrichtung
- 2: Zu tragender Gegenstand
- 3: Messskala
- 4: Lanyardband
- 5: Träger
- 6: Panikverschluss
- 7: Erste Einstecklasche
- 8: Erste Durchstecköffnung
- 9: Zweite Einstecklasche
- 10: Zweite Durchstecköffnung
- 11: Reiter (Merkhilfe)

## Patentansprüche

1. Umhängeband zum Tragen von Schlüsseln, Ausweisen oder ähnlichem mit einem, um den Hals einer Person legbaren Lanyardband (4), das an einem unteren Ende eine Befestigungsvorrichtung (1) für einen zu tragenden Gegenstand (2) aufweist, **dadurch gekennzeichnet, dass**
das Lanyardband (4) auf zumindest einer Seite mit einer Messskala (3) versehen ist.

2. Umhängeband nach Anspruch 1, **dadurch gekennzeichnet, dass** das Lanyardband (4) aus einem unflexiblen Material, insbesondere aus einem wenig elastischen Textilband hergestellt ist.

3. Umhängeband nach Anspruch 1, **dadurch gekennzeichnet, dass** das Lanyardband (4) aus einem Kunststoffmaterial mit eingelegten Verstärkungsfasern (5) gefertigt ist.

4. Umhängeband nach Anspruch 3, **dadurch gekennzeichnet, dass** die Verstärkungsfasern oder ein aus den Verstärkungsfasern bestehender Faserbündel zur Erzielung einer Eichfähigkeit in Richtung der Längsachse des Lanyardbandes (4) nicht dehnbar sind.

5. Umhängeband nach einem der beiden vorhergehenden Ansprüche, **dadurch gekennzeichnet, dass** die Verstärkungsfasern zumindest teilweise von einem Gewebe gebildet sind.

6. Umhängeband nach einem der Ansprüche 3, 4 oder 5, **dadurch gekennzeichnet, dass** die Verstärkungsfasern zumindest teilweise von längs des Lanyardbandes (4) verlaufenden, im Wesentlichen parallel zueinander verlaufenden Fasern gebildet sind.

7. Umhängeband nach einem der Ansprüche 3 bis 6, **dadurch gekennzeichnet, dass** die Verstärkungsfasern zumindest teilweise aus einem bei üblicher Raumtemperatur unelastischen Kunststoff hergestellt sind oder Glasfasern sind.

8. Umhängeband nach einem der vorhergehenden Ansprüche, **dadurch gekennzeichnet, dass** die Messskala (3) eine metrische Unterteilung aufweist.

9. Umhängeband nach einem der vorhergehenden Ansprüche, **dadurch gekennzeichnet, dass** die Messskala (3) auf einem insbesondere hülsenförmigen Träger (5) angeordnet ist, der auf das Lanyardband (4) aufgeschoben ist.

10. Umhängeband nach einem der Ansprüche 1 bis 8, **dadurch gekennzeichnet, dass** der Träger (5) eine Klammer ist, die einseitig auf dem Lanyardband (4) aufliegt und mit zwei um 180° umgelegten Enden das Lanyardband (4) umgreift.

11. Umhängeband nach einem der Ansprüche 9 oder 10, **dadurch gekennzeichnet, dass** der Träger (5) aus einem transparenten Kunststoff gefertigt ist.

12. Umhängeband nach einem der vorhergehenden Ansprüche, **dadurch gekennzeichnet, dass** das Lanyardband (4) auf der äußeren und/oder der inneren Seite mit der Messskala (3), versehen ist.

13. Umhängeband nach einem der vorhergehenden Ansprüche, **dadurch gekennzeichnet, dass** das Lanyardband (4) mit einem Informationsträger in Form einer aufgeschobenen Hülse oder eines aufgesteckten Trägers, insbesondere Flaggen zum Kenntlichmachen der Sprachkenntnisse, versehen ist.

14. Umhängeband nach einem der vorhergehenden Ansprüche, **dadurch gekennzeichnet, dass** im Abstand zu dem unteren Ende zumindest ein, bei Aufbringen einer Zugkraft sich selbsttätig öffnender Panikverschluss (6) vorgesehen ist, der zur Bildung eines zu einem geschlossenen Bandes ein erstes freies Ende und ein zweites freie Ende des Lanyardbandes (4) miteinander verbindet.

15. Umhängeband nach dem vorhergehenden Anspruch, **dadurch gekennzeichnet, dass** das Lanyardband aus einem steifen Material, insbesondere Neopren gefertigt ist.

16. Umhängeband nach einem der beiden vorhergehenden Ansprüche, **dadurch gekennzeichnet, dass** der Panikverschluss (6) von einer an dem ersten freien Ende angeordneten ersten Einstecklasche (7) und einer an dem zweiten freien Ende angeordneten ersten Durchstecköffnung (8) gebildet ist, durch die die erste Einstecklasche (7) gegen die Kraft einer Rückhaltekraft hindurch steckbar ist.

17. Umhängeband nach dem vorhergehenden Anspruch, **dadurch gekennzeichnet, dass** die erste Einstecklasche (7) wenigstens einen seitlich hervorspringenden Randbereich aufweist, der einen Rand der ersten Durchstecköffnung (5) zur Bildung einer formschlüssigen Verbindung bei Einstecken der ersten Einstecklasche (7) in die erste Durchstecköffnung (8) zu hintergreifen vermag.

18. Umhängeband nach einem der vorhergehenden Ansprüche, **dadurch gekennzeichnet, dass** der Panikverschluss (6) eine Zusatzsicherung aufweist, die von einer an dem zweiten freien Ende hinter der ersten Durchstecköffnung (5) angeordneten zweiten Einstecklasche (9) und einer an dem ersten freien Ende angeordneten, vor der ersten Einstecklasche (7) angeordneten Zweiten Durchstecköffnung (10) gebildet ist, durch die die zweite Einstecklasche (9) gegen eine Rückhaltekraft hindurch steckbar ist.

19. Umhängeband nach einem der vorhergehenden Ansprüche, **dadurch gekennzeichnet, dass** die zweite Einstecklasche (9) wenigstens einen seitlich hervorspringenden Randbereich aufweist, der einen Rand der Zweiten Durchstecköffnung (10) zur Bildung einer formschlüssigen Verbindung bei Einstecken der zweiten Einstecklasche (9) in die Zweite Durchstecköffnung (10) zu hintergreifen vermag.

20. Umhängeband nach einem der vorhergehenden Ansprüche, **dadurch gekennzeichnet, dass** die erste Durchstecköffnung (8) von einem im Winkel zur Längsachse des Lanyardbandes (4) angeordneten ersten Querschlitz gebildet ist.

21. Umhängeband nach dem vorhergehenden Anspruch, **dadurch gekennzeichnet, dass** der Winkel zwischen dem ersten Querschlitz und der Längsachse des Lanyardbandes (4) 90° beträgt.

22. Umhängeband nach einem der vorhergehenden Ansprüche, **dadurch gekennzeichnet, dass** die Zweite Durchstecköffnung (10) von einem im Winkel zur Längsachse des Lanyardbandes (4) angeordneten zweiten Querschlitz gebildet ist.

23. Umhängeband nach dem vorhergehenden Anspruch, **dadurch gekennzeichnet, dass** der Winkel zwischen dem zweiten Querschlitz und der Längsachse des Lanyardbandes (4) 90° beträgt.

24. Umhängeband nach einem der vorhergehenden Ansprüche, **dadurch gekennzeichnet, dass** die erste Einstecklasche (7) und/oder die zweite Einstecklasche (9) von einem Einschnitt und einem dahinter angeordneten erweiterten Endstück, insbesondere mit einer pfeilartigen Außenkontur gebildet ist.

25. Umhängeband nach einem der vorhergehenden Ansprüche, **dadurch gekennzeichnet, dass** gesehen vom zweiten Ende hinter der zweiten Durchstecköffnung (10) zumindest eine weitere Durchstecköffnung angeordnet ist.

26. Umhängeband nach einem der vorhergehenden Ansprüche, **dadurch gekennzeichnet, dass** gesehen vom ersten Ende hinter der ersten Durchstecköffnung (5) zumindest eine weitere Durchstecköffnung angeordnet ist.

27. Umhängeband nach einem der vorhergehenden Ansprüche, **dadurch gekennzeichnet, dass** der Panikverschluss (6) an dem dem unteren Ende gegenüberliegenden Bereich des geschlossenen Lanyardbandes angeordnet ist.

28. Umhängeband nach einem der vorhergehenden Ansprüche, **dadurch gekennzeichnet, dass** die Befestigungsvorrichtung (1) ein Karabinerhaken, Schlüsselring oder eine Clipverbindung ist.

29. Umhängeband nach einem der vorhergehenden Ansprüche, **dadurch gekennzeichnet, dass** die Befestigungsvorrichtung (1) von einem mit seinem oberen Ende mit dem geschlossenen Lanyardband verbundenen Halteband gebildet ist, das an seinem unteren Ende Befestigungsmittel aufweist.

30. Umhängeband nach dem vorhergehenden Anspruch, **dadurch gekennzeichnet, dass** das Halteband eine Schnelllösevorrichtung aufweist, die das Halteband in einen unteren Teil und einen oberen Teil unterteilt und über die der untere Teil des Haltebandes leicht abnehmbar ist.

31. Umhängeband nach dem vorhergehenden Anspruch, **dadurch gekennzeichnet, dass** das Lanyardband (4) im Bereich des ersten Endes und des zweiten Endes eine Beschichtung aufweist, die eine weitgehende Formstabilität oder Zähigkeit des ersten Endes und des zweiten Endes gewährleistet.

32. Umhängeband nach dem vorhergehenden Anspruch, **dadurch gekennzeichnet, dass** auf dem Lanyardband (4) zumindest ein verschiebbarer Reiter als Merkhilfe angeordnet ist.
